# EUROPÄISCHE PATENTSCHRIFT

(11) **EP 3 048 557 B1**
(45) Veröffentlichungstag und Bekanntmachung des Hinweises auf die Patenterteilung: **25.09.2019**
(21) Anmeldenummer: 15151850.3
(22) Anmeldetag: 20.01.2015
(51) Int. Cl.: G06K 9/00

(54) **Verfahren zum Ermitteln einer Lage eines Fahrzeugmerkmals**
Method for determining a position of a vehicle characteristic
Procédé de détermination d'une position d'un caractéristique de véhicule

(43) Veröffentlichungstag der Anmeldung: 27.07.2016
(73) Patentinhaber: Aptiv Technologies Limited, St. Michael (BB)
(72) Erfinder: Kalms, Volker S., 42349 Wuppertal (DE); Busch, Mathias, 42389 Wuppertal (DE); Egbert, Peter, 51766 Engelskirchen (DE); Vorwerk, Wolfgang, 45549 Sprockhövel (DE)
(74) Vertreter: Manitz Finsterwald Patent- und Rechtsanwaltspartnerschaft mbB

(56) Entgegenhaltungen:
- DE-A1-102007 022 523
- DE-A1-102014 013 578
- DE-C1- 19 507 957
- US-A1- 2010 201 818
- MERTZ C ET AL: "Side collision warning systems for transit buses", INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 344-349, XP010528961, DOI: 10.1109/IVS.2000.898367 ISBN: 978-0-7803-6363-2
- AUFRERE R ET AL: "Multiple sensor fusion for detecting location of curbs, walls, and barriers", PROC. IEEE INTELLIGENT VEHICLE SYMPOSIUM, 2003,, 9. Juni 2003 (2003-06-09), Seiten 126-131, XP010645862, ISBN: 978-0-7803-7848-3
- KELLNER MARTIN ET AL: "Road curb detection based on different elevation mapping techniques", 2014 IEEE INTELLIGENT VEHICLES SYMPOSIUM PROCEEDINGS, IEEE, 8. Juni 2014 (2014-06-08), Seiten 1217-1224, XP032620308, DOI: 10.1109/IVS.2014.6856534 [gefunden am 2014-07-15]
- TAO Z ET AL: "Mapping and localization using GPS, lane markings and proprioceptive sensors", 2013 IEEE/RSJ INTERNATIONAL CONFERENCE ON INTELLIGENT ROBOTS AND SYSTEMS, IEEE, 3. November 2013 (2013-11-03), Seiten 406-412, XP032537362, ISSN: 2153-0858, DOI: 10.1109/IROS.2013.6696383 [gefunden am 2013-12-26]
- ROSE CHRISTOPHER ET AL: "An Integrated Vehicle Navigation System Utilizing Lane-Detection and Lateral Position Estimation Systems in Difficult Environments for GPS", IEEE TRANSACTIONS ON INTELLIGENT TRANSPORTATION SYSTEMS, IEEE, PISCATAWAY, NJ, USA, Bd. 15, Nr. 6, 1. Dezember 2014 (2014-12-01), Seiten 2615-2629, XP011565370, ISSN: 1524-9050, DOI: 10.1109/TITS.2014.2321108 [gefunden am 2014-11-25]

## Beschreibung

Die Erfindung betrifft ein Verfahren zum Vergleichen von einer durch ein Fahrerassistenzsystem berechneten Lage eines Fahrzeugmerkmals relativ zu einem in einem Umgebungsbereich des Fahrzeugmerkmals befindlichen Umgebungsmerkmal mit einer tatsächlichen Lage des Fahrzeugmerkmals relativ zu dem Umgebungsmerkmal.

Fahrerassistenzsysteme, wie z.B. Spurhalteassistenten, finden immer stärkere Verbreitung. Ein Spurhalteassistent ermittelt während einer Fahrt des Fahrzeugs einen seitlichen Abstand des Fahrzeugs relativ zu einer Fahrbahnmarkierung. Dieser Abstand wird z.B. auf der Grundlage von Bildern einer Frontkamera berechnet. Die Frontkamera ist im Bereich einer Windschutzscheibe des Fahrzeugs angeordnet und erfasst mit ihrem Sichtbereich unter anderem eine vor dem Fahrzeug liegende Fahrbahn. Das Fahrzeug selbst liegt jedoch nicht im Sichtbereich der Frontkamera. Daher wird der seitliche Abstand des Fahrzeugs relativ zu einer Fahrbahnmarkierung anhand der für die Frontkamera sichtbaren Fahrbahnmarkierungen in Verbindung mit Informationen über die Position der Frontkamera in dem Fahrzeug berechnet.

Insbesondere bei einer Kalibrierung und/oder Validierung eines derartigen Fahrerassistenzsystems gilt es, den von dem Fahrerassistenzsystem berechneten Abstand des Fahrzeugs zu der Fahrbahnmarkierung mit dem tatsächlichen Abstand zu vergleichen. Zu diesem Zweck ist es bekannt, den tatsächlichen Abstand mittels eines globalen Positionssystems mit Differentialsignal (DGPS) zu ermitteln.

Dieses Vorgehen erfordert jedoch kostenintensive Hardware. Außerdem muss eine bei der Kalibrierung oder Validierung verwendete Teststrecke zuvor gesondert vermessen werden, um die absoluten Positionen der Fahrbahnmarkierungen zu bestimmen. Dies treibt die Kosten für die Kalibrierung oder Validierung weiter in die Höhe und bedeutet darüber hinaus, dass öffentliche Straßen zur Kalibrierung oder Validierung mittels DGPS nur eingeschränkt geeignet sind.

Aus der US 2010/0201818 A1 ist ein Verfahren zum Ermitteln einer Lage eines Fahrzeugmerkmals relativ zu einem Umgebungsmerkmal bekannt, bei dem ein Live-Bild zusammen mit einem älteren Bild angezeigt wird und in dem älteren Bild eine Skala zur Ermittlung der Lage des Fahrzeugmerkmals relativ zu dem Umgebungsmerkmal angezeigt wird. Weitere Lageermittlungsverfahren sind offenbart in:
MERTZ C ET AL, "Side collision warning systems for transit buses", INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, (20001003), doi:10.1109/IVS.2000.898367, ISBN 978-0-7803-6363-2, pages 344 - 349; AUFRERE R ET AL, "Multiple sensor fusion for detecting location of curbs, walls, and barriers", PROC. IEEE INTELLIGENT VEHICLE SYMPOSIUM, 2003,, (20030609), ISBN 978-0-7803-7848-3, pages 126 - 131, XP010645862 [I] 1,4-15 * page 126 - page 128; DE 2007 022 523 A1; KELLNER MARTIN ET AL, "Road curb detection based on different elevation mapping techniques", 2014 IEEE INTELLIGENT VEHICLES SYMPOSIUM PROCEEDINGS, IEEE, (20140608), doi:10.1109/IVS.2014.6856534, pages 1217 - 1224; TAO Z ET AL, "Mapping and localization using GPS, lane markings and proprioceptive sensors", 2013 IEEE/RSJ INTERNATIONAL CONFERENCE ON INTELLIGENT ROBOTS AND SYSTEMS, IEEE, doi:10.1109/IROS.2013.6696383, ISSN 2153-0858, (20131103), pages 406 - 412, (20131226); ROSE CHRISTOPHER ET AL, "An Integrated Vehicle Navigation System Utilizing Lane-Detection and Lateral Position Estimation Systems in Difficult Environments for GPS", IEEE TRANSACTIONS ON INTELLIGENT TRANSPORTATION SYSTEMS, IEEE, PISCATAWAY, NJ, USA, vol. 15, no. 6, doi:10.1109/TITS.2014.2321108, ISSN 1524-9050, (20141201), pages 2615 - 2629, (20141125).

Bei diesen Verfahren wird unter anderem eine Laserlinie auf einen Untergrund projiziert.

Es ist eine Aufgabe der Erfindung, ein einfacheres und wirtschaftlicheres Verfahren zum Vergleichen von einer durch ein Fahrerassistenzsystem berechneten Lage eines Fahrzeugmerkmals relativ zu einem in einem Umgebungsbereich des Fahrzeugmerkmals befindlichen Umgebungsmerkmal mit einer tatsächlichen Lage des Fahrzeugmerkmals relativ zu dem Umgebungsmerkmal zu schaffen.

Diese Aufgabe wird durch ein Verfahren gemäß Anspruch 1 gelöst. Konkret betrifft die Erfindung ein Verfahren zum Vergleichen von einer durch ein Fahrerassistenzsystem berechneten Lage eines Fahrzeugmerkmals relativ zu einem in einem Umgebungsbereich des Fahrzeugmerkmals befindlichen Umgebungsmerkmal mit einer tatsächlichen Lage des Fahrzeugmerkmals relativ zu dem Umgebungsmerkmal. Dieses Verfahren macht sich das nachstehend beschriebene Verfahren zur Bestimmung der tatsächlichen Lage vorteilhaft zunutze und ermöglicht z.B. eine besonders einfache Kalibrierung und/oder Validierung der Genauigkeit und/oder Verlässlichkeit eines Fahrerassistenzsystems.

Die Ermittlung der tatsächlichen Lage erfolgt mit den Schritten:
Anordnen einer Kamera an dem Fahrzeug mit einer festen Orientierung relativ zu dem Fahrzeug derart, dass das Fahrzeugmerkmal und ein Umgebungsbereich des Fahrzeugmerkmals im Sichtbereich der Kamera liegen;
Erzeugen einer Skala in dem Umgebungsbereich des Fahrzeugmerkmals für die Ermittlung der Lage des Fahrzeugmerkmals relativ zu einem in dem Umgebungsbereich befindlichen Umgebungsmerkmal;
Während einer Fahrt des Fahrzeugs Aufnehmen wenigstens eines Messbildes mittels der Kamera oder Erzeugen wenigstens eines Messbildes aus einem durch die Kamera aufgenommenen Bild, wobei das Messbild das Fahrzeugmerkmal, die Skala und ein in dem Umgebungsbereich des Fahrzeugmerkmals befindliches Umgebungsmerkmal enthält;
Ermitteln der Lage des Fahrzeugmerkmals relativ zu dem Umgebungsmerkmal anhand der Position des Umgebungsmerkmals relativ zu der Skala im Messbild.

Das erfindungsgemäße Verfahren zur Lageermittlung benötigt zu seiner Durchführung lediglich kostengünstige Gerätschaften, nämlich im Wesentlichen nur eine Kamera und Mittel zum Erzeugen einer Skala. Kostenintensive Hardware insbesondere zur absoluten Positionsbestimmung mittels eines DGPS ist dagegen entbehrlich. Als Kamera kann eine handelsübliche Kamera verwendet werden, insbesondere eine Videokamera, z.B. ein Action-Camcorder, aus dem Bereich der Konsumgüter. Die Kamera kann hinter dem Fahrzeugmerkmal derart angeordnet werden, dass die Kamera in Fahrtrichtung blickt. Alternativ kann die Kamera vor dem Fahrzeugmerkmal angeordnet werden, wobei der Sichtbereich der Kamera nach hinten gerichtet ist. Auch eine Beobachtung des Fahrzeugmerkmals durch die Kamera im Wesentlichen von oben ist möglich.

Da die Kamera zur Durchführung des Verfahrens z.B. vor oder hinter einem Reifen und somit innerhalb des Umgrenzungsprofils des Fahrzeugs angeordnet werden kann, lässt sich das Verfahren auch auf öffentlichen Straßen anwenden. Es ist also nicht auf ausgewiesene Teststrecken beschränkt, welche nur begrenzt vorhanden und kostenintensiv zu mieten sind.

Das erfindungsgemäße Verfahren zur Lageermittlung lässt sich z.B. bei einer Kalibrierung, Referenzierung, Eichung und/oder Validierung eines Fahrerassistenzsystems anwenden. Die genannten Vorhaben werden durch das erfindungsgemäße Verfahren vereinfacht und beschleunigt. Eine Kalibrierung oder Neukalibrierung ist mit dem erfindungsgemäßen Verfahren zur Lageermittlung z.B. auch von Werkstattpersonal durchführbar, welches keinen Zugang zu einem bekannten System zur Lageermittlung, wie z.B. DGPS, hat. Selbst wenn ein Kunde des Fahrerassistenzsystems für eine Validierung des Systems eine Lageermittlung mittels DGPS fordert, kann das erfindungsgemäße Verfahren zur Lageermittlung dennoch zumindest während der Entwicklung und Integration des Fahrerassistenzsystems kostensparend angewendet werden.

Ein weiterer Vorteil des erfindungsgemäßen Verfahrens zur Lageermittlung liegt darin, dass die Ermittlung der Lage unabhängig von der Art und Form einer Linse oder eines Objektives der Kamera ist. Auch wenn die Skala aus perspektivischen Gründen oder aufgrund einer Linsenkrümmung verzerrt im Messbild sichtbar ist, besitzen die weiteren im Messbild sichtbaren Objekte und insbesondere das Umgebungsmerkmal die gleiche perspektivische und linsenabhängige Verzerrung. Es ist somit nicht notwendig, z.B. durch eine Datenverarbeitungseinrichtung die Linsenkrümmung bei der Lagebestimmung herauszurechnen. Dies ist insbesondere dann vorteilhaft, wenn die Kamera unter dem Fahrzeug angeordnet werden soll. Denn unter einem Fahrzeug steht nur wenig Raum für eine Kameraanordnung zur Verfügung, weshalb die Kamera bei vielen Anwendungsszenarien des Verfahrens mit einem Weitwinkelobjektiv auszustatten ist. Gerade Weitwinkelobjektive verursachen jedoch eine besonders starke Bildverzerrung insbesondere im Randbereich eines Bildes.

Gemäß einer Ausführungsform umfassen das Erzeugen der Skala und das Erzeugen des Messbildes die Schritte: (a) Anlegen eines Maßstabs an das Fahrzeugmerkmal bei stehendem Fahrzeug; (b) Aufnehmen eines das Fahrzeugmerkmal und den Maßstab enthaltenden Ausgangsbildes durch die Kamera; (c) Entfernen des Maßstabs von dem Fahrzeugmerkmal; (d) Aufnehmen wenigstens eines Zwischenbildes durch die Kamera während einer Fahrt des Fahrzeugs, wobei das Zwischenbild das Fahrzeugmerkmal und ein in dem Umgebungsbereich des Fahrzeugmerkmals befindliches Umgebungsmerkmal enthält; (e) zumindest teilweises Überlagern des Ausgangsbildes und des Zwischenbildes zu dem Messbild derart, dass der Maßstab im Messbild an der Stelle sichtbar ist, an der er im Ausgangsbild aufgenommen wurde, und das mit dem Zwischenbild aufgenommene Umgebungsmerkmal im Messbild sichtbar ist.

Der Maßstab, z.B. ein Lineal oder Meterstab, weist eine Skala auf, die im Messbild sichtbar gemacht wird. Da die Skala im Messbild an der Stelle angezeigt wird, an der sie im Ausgangsbild aufgenommen wurde, kann der Betrachter des Messbildes, insbesondere sofern er auch den Maßstab selbst angelegt hat, besonders auf dieses Verfahren zur Lageermittlung vertrauen. Anders gesagt beruht das Verfahren nur auf Referenzobjekten, die der Betrachter tatsächlich sieht oder gesehen hat, was z.B. eine besonders kundenfreundliche Validierung eines Fahrerassistenzsystems ermöglicht.

Durch eine pixelgenaue Übertragung des Maßstabs aus dem Ausgangsbild in das Messbild kann das Verfahren mit beliebigen Linsen oder Objektiven der Kamera durchgeführt werden.

Bevorzugt umfasst das Anlegen des Maßstabs ein Platzieren des Maßstabs auf einem Boden, auf dem das Fahrzeug steht. Der Boden bildet somit eine einfache und verlässliche Referenz für das Anlegen des Maßstabs. Vorteilhafterweise wird der Maßstab im Wesentlichen quer, insbesondere senkrecht, zu einer Längsachse des Fahrzeugs angelegt. Mit anderen Worten kann der Maßstab parallel zu einer Querachse des Fahrzeugs angeordnet werden. Somit lässt sich insbesondere der seitliche Abstand des Fahrzeugmerkmals relativ zu dem Umgebungsmerkmal einfach und zuverlässig bestimmen.

Gemäß einer alternativen Ausführungsform wird die Skala, beispielsweise durch ein Lasersystem und/oder einen Projektor, auf einen Bodenabschnitt im Umgebungsbereich des Fahrzeugmerkmals projiziert, insbesondere während der Fahrt des Fahrzeugs. Dabei ist das Messbild ein von der Kamera aufgenommenes Bild. Bei dieser Ausführungsform ist keine computergestützte Datenverarbeitung von durch die Kamera aufgenommenen Bildern notwendig. Stattdessen lässt sich die Lage des Fahrzeugmerkmals relativ zu dem Umgebungsmerkmal direkt in einem von der Kamera aufgenommenen Bild ablesen. Außerdem lässt sich eine Vorrichtung zur Ausführung des Verfahrens nach dieser Ausführungsform platzsparend und insbesondere gänzlich unter dem Fahrzeug anordnen, so dass das Umgrenzungsprofil des Fahrzeugs zwar baulich nicht überschritten wird, die Skala aber dennoch jenseits des Umgrenzungsprofils sichtbar ist, nämlich dort, wo ein Umgebungsmerkmal zu erwarten ist.

Gemäß einer Ausführungsform wird als Lage ein Abstand zwischen dem Fahrzeugmerkmal und dem Umgebungsmerkmal ermittelt. Der Abstand ist in vielen Anwendungsszenarien des erfindungsgemäßen Verfahrens zur Lagebestimmung, wie z.B. bei der Validierung eines Spurhalteassistenten, von besonderem Interesse. Der Abstand lässt sich dabei einfach an der Skala ablesen. Der Abstand wird bevorzugt quer zu einer Längsachse des Fahrzeugs gemessen, insbesondere senkrecht zu der Längsachse bzw. parallel zu einer Querachse des Fahrzeugs. Somit lässt sich der Querabstand des Fahrzeugmerkmals und somit des Fahrzeugs relativ zu dem Umgebungsmerkmal einfach ermitteln.

Das Fahrzeugmerkmal kann ein Reifen des Fahrzeugs sein. Ein Reifen lässt sich gut in einem Kamerabild sichtbar machen und es ist möglich, die Kamera an einer Unterseite des Fahrzeugs anzubringen, ohne das Umgrenzungsprofil des Fahrzeugs baulich zu überschreiten, d.h. ohne dass die Kamera seitlich hervorragt. Ein weiterer Vorteil des Reifens als Referenzobjekt liegt darin, dass der Reifen an einem Boden, auf dem das Fahrzeug steht, aufliegt. Auf diese Weise lässt sich insbesondere ein Maßstab einfach und mit hoher Genauigkeit an den Reifen anlegen, was die Durchführung des Verfahrens weiter vereinfacht und die Genauigkeit des Messergebnisses erhöht.

Das Umgebungsmerkmal kann z.B. eine Fahrbahnmarkierung oder -begrenzung, eine Fahrstreifenbegrenzung und/oder eine Leitlinie, wie z.B. eine gestrichelte oder unterbrochene Linie, sein. Diese Arten von Umgebungsmerkmalen werden im Folgenden zusammenfassend als Fahrbahnmarkierung bezeichnet. Zum Beispiel ist die relative Lage des Fahrzeugmerkmals relativ zu der Fahrbahnmarkierung von besonderem Interesse, wenn ein im Fahrzeug vorgesehener Spurhalteassistent kalibriert oder validiert werden soll. In der Praxis können Fahrbahnmarkierungen von höchst unterschiedlicher Beschaffenheit sein. Zum Beispiel können die Fahrbahnmarkierungen in unterschiedlichen Ländern unterschiedliche Formen und Farben aufweisen. Ferner können Fahrbahnmarkierungen unterschiedlich stark abgetragen oder verschmutzt sein. Das Verfahren lässt sich in diesem Fall jedoch trotzdem ausführen, sofern die Fahrbahnmarkierung noch in gewissem Maße für einen Betrachter sichtbar ist. So lässt sich z.B. die Genauigkeit oder die Verlässlichkeit eines Spurhalteassistenten selbst bei schlechter Beschaffenheit der Fahrbahnmarkierung noch validieren.

Gemäß einer weiteren Ausführungsform bildet das Messbild und gegebenenfalls das Zwischenbild einen Frame einer Mess-Videosequenz bzw. Zwischen- Videosequenz. Mit anderen Worten erfolgt die Lageermittlung nicht nur anhand eines einzelnen Messbildes, sondern anhand einer Vielzahl von Messbildern, nämlich anhand der Mess-Videosequenz, wodurch sich die Lage des Fahrzeugmerkmals relativ zu dem Umgebungsmerkmal während der Fahrt des Fahrzeugs über einen längeren Zeitraum hinweg kontinuierlich und gegebenenfalls live beobachten lässt. Erfolgt die Erzeugung der Skala in der Mess-Videosequenz durch Projektion in den Umgebungsbereich mittels eines Lasersystems oder Projektors, so kann die Mess-Videosequenz eine Live-Videosequenz sein. Wird die Skala aus einem zuvor aufgenommenen Ausgangsbild entnommen und künstlich in die Zwischenbilder eingesetzt, kann es sich auch bei der Zwischen-Videosequenz um eine Live-Videosequenz handeln.

Vorzugsweise umfasst das Ermitteln der Position des Umgebungsmerkmals relativ zu der Skala im Messbild ein Ablesen der Skala an der Stelle, an der das Umgebungsmerkmal die Skala im Messbild berührt oder schneidet. Die Lage des Fahrzeugmerkmals relativ zu dem Umgebungsmerkmal lässt sich so ebenfalls direkt an der Skala ablesen. Die Skala kann z.B. eine Zentimeterunterteilung mit besonders kontrastreichen Markierungen umfassen, so dass beispielsweise ein Abstand zwischen dem Reifen und der Fahrbahnmarkierung besonders einfach, insbesondere durch eine Datenverarbeitungseinrichtung oder einen menschlichen Betrachter, ablesbar ist.

Gemäß einer Ausführungsform wird auch die berechnete Lage im Messbild dargestellt. Dadurch lassen sich die berechnete Lage und die tatsächliche Lage für einen Betrachter besonders komfortabel gleichzeitig ablesen. Die berechnete Lage kann dabei durch eine am Fahrzeug und in dem Sichtbereich der Kamera angeordnete visuelle Ausgabeeinheit im Messbild dargestellt werden. Ein Vorteil liegt hier darin, dass die visuelle Ausgabeeinheit am Fahrzeug angebracht ist und somit einfach an das Fahrerassistenzsystem z.B. über einen CAN-Bus angeschlossen werden kann. Gleichzeitig kann das Messbild unabhängig vom Fahrzeug ausgegeben werden. Dadurch ist es möglich, die Kamera direkt mit einer Bildanzeige, wie z.B. einem Smartphone, zu verbinden und das Messbild auszugeben, während weder die Kamera noch die Bildanzeige mit dem Fahrerassistenzsystem verbunden sein müssen.

Gemäß einer weiteren Ausführungsform werden im Messbild zusätzliche Informationen des Fahrerassistenzsystems dargestellt. Die zusätzlichen Informationen können beispielsweise Zeitmarkierungen, Diagnosedaten des Fahrerassistenzsystems, Synchronisationsinformationen und/oder Dateinamen für die aufgenommenen Bilder umfassen und werden bevorzugt mittels einer am Fahrzeug und in einem Sichtbereich der Kamera angeordneten visuellen Ausgabeeinheit ausgegeben und zusammen mit der berechneten Lage im Messbild dargestellt.

Die berechnete Lage und/oder zusätzliche Informationen des Fahrerassistenzsystems können zumindest teilweise in Form einer computerlesbaren Codierung und/oder eines computerlesbaren Musters, insbesondere in Form eines Strich- oder QR-Codes, angezeigt werden. Dadurch lässt sich eine Vielzahl von Informationen platzsparend im Messbild anzeigen und automatisch z.B. durch eine Datenverarbeitungseinrichtung auswerten. Insbesondere kann die Codierung durch eine Datenverarbeitungseinrichtung über die Dauer einer Zwischen- und/oder Mess-Videosequenz aufgenommen und ausgewertet werden. Der Vergleich zwischen berechneter und tatsächlicher Lage lässt sich somit über die Zeit z.B. in einem Diagramm auftragen, wodurch z.B. eine Validierung noch genauer durchgeführt und besser dokumentiert werden kann. Die berechnete Lage und/oder die zusätzlichen Informationen können aber auch in Form von Zahlen, Buchstaben und/oder Binärzeichen angezeigt werden, wodurch sie durch einen Betrachter besser ablesbar sind.

Vorzugsweise wird das Messbild durch eine Bildanzeige angezeigt. Dadurch wird einem Betrachter der Bildanzeige das Vergleichen der berechneten Lage mit der tatsächlichen Lage in komfortabler Weise ermöglicht. Die Bildanzeige kann z.B. einen direkt mit der Kamera verbundenen Bildschirm oder einen drahtlos angebundenen Mobilcomputer, wie z.B. ein Smartphone oder Tablet-PC, umfassen.

Das Fahrerassistenzsystem kann einen Spurhalteassistenten und/oder einen Spurverlassenswarnassistenten umfassen. Für beide Arten von Fahrerassistenzsystemen ist der Abstand zwischen dem Reifen bzw. dem Fahrzeug und einer Fahrbahnmarkierung von besonderer Bedeutung. Das Fahrerassistenzsystem kann automatisch oder halbautomatisch, kameragestützt und/oder radargestützt arbeiten und auch andere Untersysteme umfassen, die Umgebungsmerkmale zu Sicherheitszwecken mit ihrer Lage relativ zu dem Fahrzeug erfassen. Beispiele dafür sind ein Radarsystem zur Überwachung eines toten Winkels des Fahrzeugs, ein radargestützter Kurvenfahrtassistent und ein radargestützter Notbremsassistent.

Gemäß einer Ausführungsform berechnet das Fahrerassistenzsystem die Lage des Fahrzeugmerkmals relativ zu dem Umgebungsmerkmal auf der Grundlage von durch eine zweite Kamera, insbesondere eine Frontkamera, aufgenommenen Bildern. Dabei liegt das Fahrzeugmerkmal insbesondere außerhalb des Sichtbereichs der zweiten Kamera. Das Fahrerassistenzsystem benötigt somit keine zusätzlichen Sensoren zur Bestimmung der Lage des Fahrzeugmerkmals relativ zu dem Umgebungsmerkmal.

Weitere vorteilhafte Ausbildungen der Erfindung sind den abhängigen Ansprüchen, der Beschreibung und den Zeichnungen zu entnehmen.

Die Erfindung wird nachfolgend lediglich beispielhaft unter Bezugnahme auf die schematischen Zeichnungen erläutert.
- Fig. 1: zeigt Elemente einer Ausführungsform der erfindungsgemäßen Vorrichtung.
- Fig. 2: zeigt ein Ausgangsbild gemäß einer Ausführungsform eines erfindungsgemäßen Verfahrens zum Lagevergleich.
- Fig. 3: zeigt ein Zwischenbild gemäß der Ausführungsform von Fig. 2.
- Fig. 4: zeigt ein Messbild gemäß der Ausführungsform von Fig. 2 und 3.
- Fig. 5: zeigt ein Messbild einer weiteren Ausführungsform eines erfindungsgemäßen Verfahrens zum Lagevergleich.

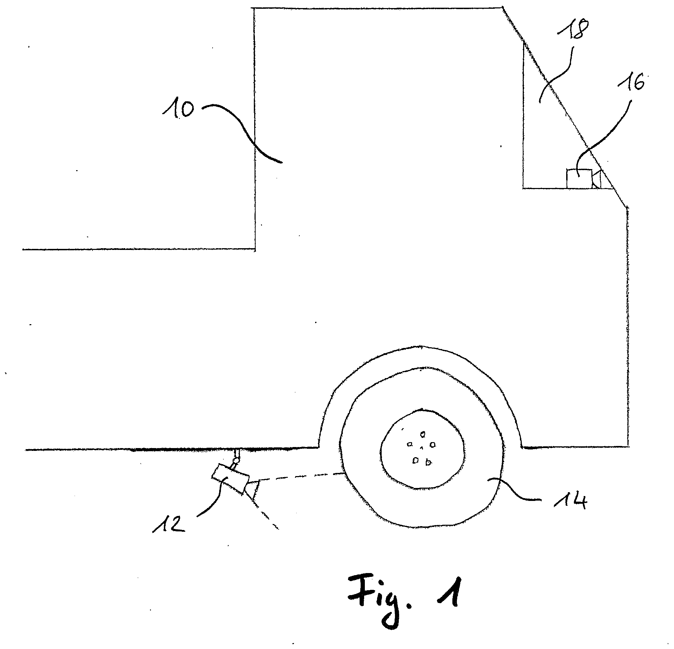

In Fig. 1 ist ein Fahrzeug 10 dargestellt, das einen nicht gezeigten Spurhalteassistenten aufweist. An der Unterseite des Fahrzeugs 10 ist eine Kamera 12 mit einer festen Orientierung derart angeordnet, dass ein Reifen 14 des Fahrzeugs 10, im vorliegenden Fall ein Vorderreifen, und ein Umgebungsbereich des Reifens 14 im Sichtbereich der Kamera 12 liegen. Der Sichtbereich der Kamera 12 ist durch gestrichelte Linien angedeutet. Die Kamera 12 ist im vorliegenden Ausführungsbeispiel hinter dem Reifen 14 angeordnet und blickt nach vorne, d.h. in Fahrtrichtung. Alternativ ist es aber genauso möglich, die Kamera 12 vordem Reifen 14 anzuordnen und den Sichtbereich der Kamera 12 nach hinten auf den Reifen 14 zu richten, d.h. die Kamera 12 entgegen der Fahrtrichtung blicken zu lassen.

Das Fahrzeug 10 weist außerdem eine Frontkamera 16 zur Aufnahme von Bildern der vor dem Fahrzeug 10 liegenden Fahrzeugumgebung auf. Die Frontkamera 16 ist hinter einer Windschutzscheibe 18 des Fahrzeugs 10 angeordnet und mit dem Spurhalteassistenten des Fahrzeugs 10 verbunden. Der Spurhalteassistent ermittelt während einer Fahrt des Fahrzeugs 10 in an sich bekannter Weise aus den durch die Frontkamera 16 aufgenommenen Bildern den Verlauf einer vor dem Fahrzeug 10 liegenden Fahrbahn und berechnet hieraus den Abstand des Fahrzeugs 10, insbesondere des Reifens 14, zu einer in Fig. 1 nicht gezeigten seitlichen Fahrbahnmarkierung 20, z.B. einem Seitenstreifen. Zwar "sieht" die Frontkamera 16 weder den Reifen 14 noch eine andere seitliche Begrenzung des Fahrzeugs 10, doch ist die Lage der Frontkamera 16 in Bezug auf das Fahrzeug 10 und den Reifen 14 bekannt. Der Spurhalteassistent kann daher den Abstand zwischen Reifen 14 und Fahrbahnmarkierung 20 vorhersagen. Der Begriff "vorhersagen" bezieht sich dabei auf die Tatsache, dass der Teil der Fahrbahnmarkierung 20, den die Frontkamera 16 zu einem bestimmten Zeitpunkt sieht, erst zeitlich später von dem Reifen 14 erreicht wird.

Unter Verwendung der Kamera 12 lässt sich im Gegensatz zu den Berechnungen des Spurhalteassistenten der tatsächliche Abstand zwischen dem Reifen 14 und der Fahrbahnmarkierung 20 ermitteln. Der tatsächliche Abstand kann dann mit dem von dem Spurhalteassistenten berechneten Abstand z.B. zwecks Kalibrierung oder Validierung des Spurhalteassistenten verglichen werden.

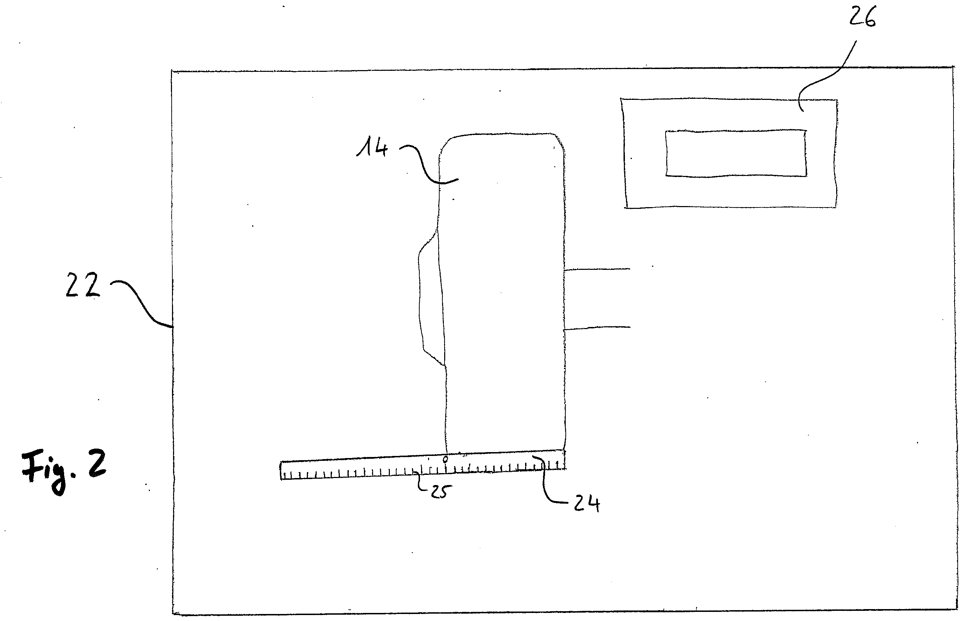

Hierzu wird im stationären Zustand des Fahrzeugs 10, mit anderen Worten bei stehendem Fahrzeug 10, zunächst ein Maßstab 24 an den Reifen 14 angelegt (Fig. 2). Konkret wird der Maßstab 24 auf den Boden gelegt, auf dem der Reifen 14 und damit das Fahrzeug 10 stehen, und parallel zur Querachse bzw. rechtwinklig zur Längsachse des Fahrzeugs 10 angeordnet. Der Maßstab 24 weist eine Skala 25 auf und ist mit einem Nullpunkt der Skala 25 an einem äußeren Rand des Reifens 14 ausgerichtet, in Fig. 2 dem linken Rand. Die Skala 25 erstreckt sich von dem äußeren Rand des Reifens 14 sowohl nach außen als auch nach innen. Dadurch kann auch ein negativer Abstand zwischen der Fahrbahnmarkierung 20 und dem äußeren Rand des Reifens 14 erfasst werden, wenn der Reifen 14 die Fahrbahnmarkierung 20 überfahren hat. Die Anordnung des Maßstabs 24 relativ zu dem Reifen wird durch die Kamera 12 aufgenommen und liefert ein Ausgangsbild 22, welches in Fig. 2 dargestellt ist.

Zusätzlich zu dem Reifen 14 und dem Maßstab 24 ist außerdem eine visuelle Ausgabeeinheit 26 im Ausgangbild 22 sichtbar, welche im Sichtbereich der Kamera 12 und innenliegend vom Reifen 14 an der Unterseite des Fahrzeugs 10 angebracht ist. Die visuelle Ausgabeeinheit 26 ist mit dem Spurhalteassistenten des Fahrzeugs 10 verbunden, beispielsweise über einen CAN-Bus. Während der Fahrt des Fahrzeugs 10 zeigt die Ausgabeeinheit 26 den durch den Spurhalteassistenten berechneten Abstand zwischen Reifen 14 und Fahrbahnmarkierung 20 an. Im Ausgangsbild 22 zeigt sie keine Ausgabe an, da sich das Fahrzeug 10 zum Aufnahmezeitpunkt des Ausgangsbildes 22 im Stillstand befindet und der Spurhalteassistent folglich keinen Abstand berechnet.

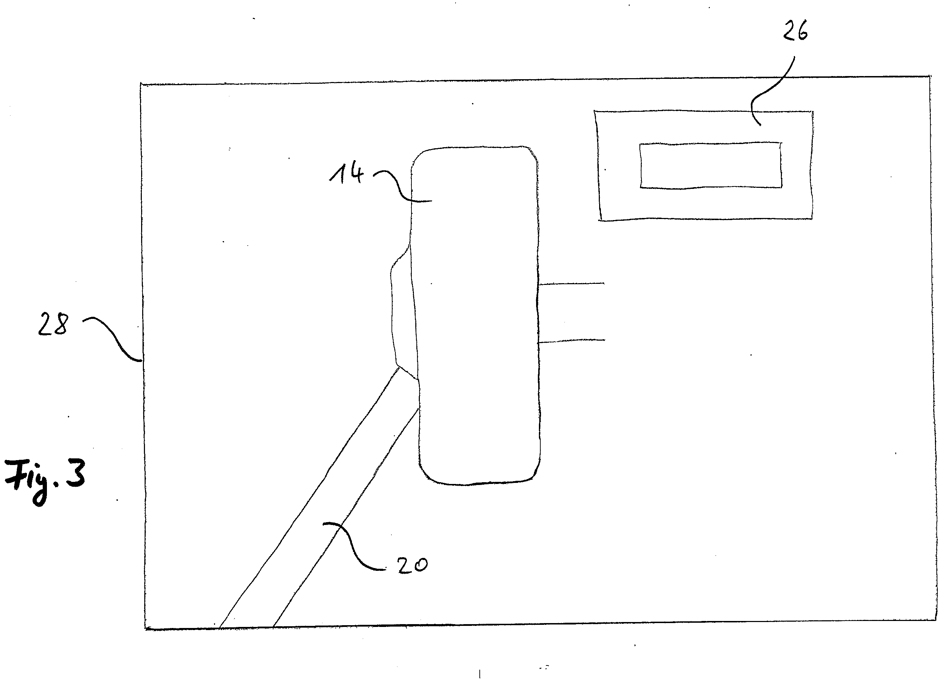

Nach der Aufnahme des Ausgangsbildes 22 wird der Maßstab 24 aus dem Sichtbereich der Kamera 12 wieder entfernt. Während einer Fahrt des Fahrzeugs 10 nimmt die Kamera 12 nun Bilder von dem Reifen 14 und dem Umgebungsbereich des Reifens 14 einschließlich der Ausgabeeinheit 26 auf, welche keinen Maßstab 24 enthalten und welche hier als Zwischenbilder 28 bezeichnet werden. Ein Beispiel für ein solches Zwischenbild 28 ist in Fig. 3 dargestellt und zeigt zusätzlich zu dem Reifen 14 und der visuellen Ausgabeeinheit 26 eine Fahrbahnmarkierung 20, zu welcher der Reifen 14 einen gewissen Abstand aufweist. Der von dem Spurhalteassistenten berechnete Abstand des Reifens 14 zu der Fahrbahnmarkierung 20 wird von der visuellen Ausgabeeinheit 26 angezeigt und ist somit in dem Zwischenbild 28 ablesbar. Im vorliegenden Ausführungsbeispiel bildet das Zwischenbild 28 einen Frame einer Zwischen-Videosequenz, die während der Fahrt des Fahrzeugs aufgenommen wird.

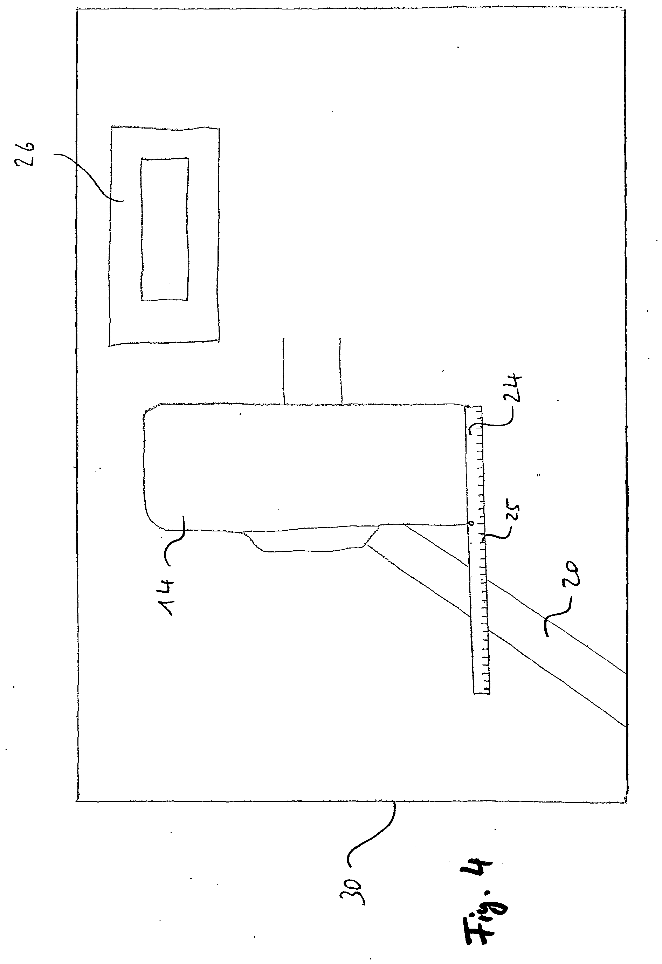

Für eine Überprüfung des von dem Spurhalteassistenten berechneten Abstands zwischen Reifen 14 und Fahrbahnmarkierung 20 wird das Zwischenbild 28 zur Bildung eines Messbildes 30 mit dem Ausgangsbild 22 überlagert. Ein resultierendes Messbild 30 ist in Fig. 4 dagestellt und zeigt den Reifen 14, die Fahrbahnmarkierung 20, die visuelle Ausgabeeinheit 26 und darüber hinaus den Maßstab 24. Das Messbild 30 entspricht mit anderen Worten also letzlich dem Zwischenbild 28 unter zusätzlicher Darstellung des Maßstabs 24. Entsprechend dem Zwischenbild 28 kann das Messbild 30 einen Frame einer Mess-Videosequenz bilden.

Konkret wird zur Erzeugung des Messbildes 30 der Maßstab 24 des Ausgangsbildes 22 mit Hilfe einer Datenverarbeitungseinrichtung aus dem Ausgangsbild 22 extrahiert und anschließend rechnerisch "über das Zwischenbild 28 gelegt", so dass er im Messbild 30 genau die gleiche Lage relativ zu den Bildrändern besitzt wie im Ausgangsbild 22.

Ein Betrachter des Messbildes 30 kann den tatsächlichen Abstand des Reifens 14 zur Fahrbahnmarkierung 20 einfach an der Skala 25 des Maßstabs 24 ablesen, und zwar an der Stelle, an der die Fahrbahnmarkierung 20 den Maßstab 24 mit ihrem inneren - in Fig. 3 und 4 rechten - Rand schneidet. Gleichzeitig ist der zum Zeitpunkt der Aufnahme des Messbildes 30 durch den Spurhalteassistenten berechnete Abstand an der visuellen Ausgabeeinheit 26 ablesbar. In einer Mess-Videosequenz lassen sich also der berechnete Abstand und der tatsächliche Abstand live und zu jedem Zeitpunkt komfortabel miteinander vergleichen.

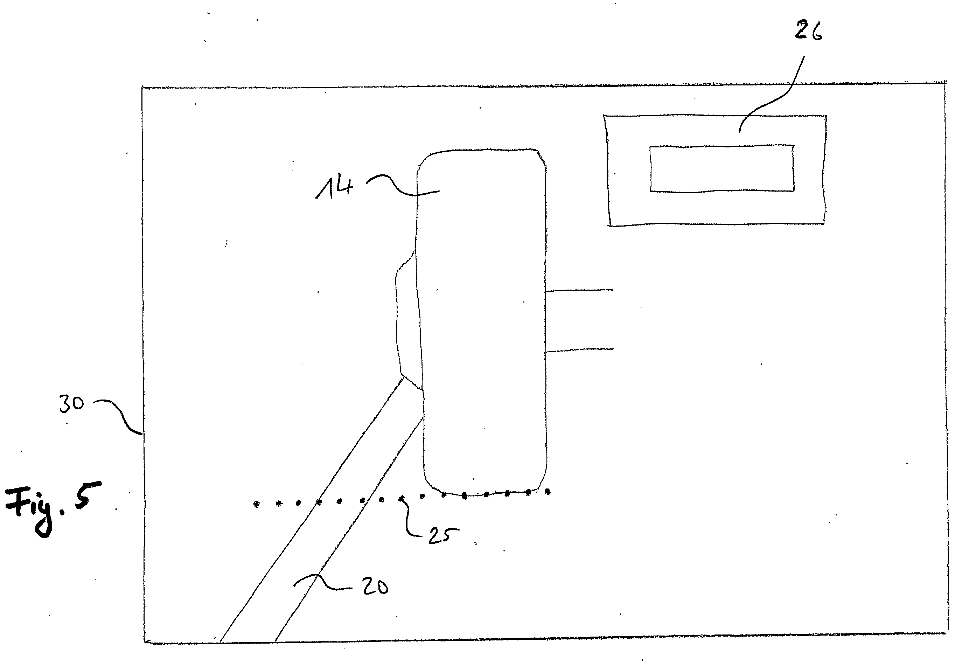

Fig. 5 zeigt ein Messbild 30, welches gemäß einem alternativen Verfahren erzeugt wurde. Bei diesem alternativen Verfahren wird die Skala zum Ablesen des tatsächlichen Abstands zwischen Reifen 14 und Fahrbahnmarkierung 20 nicht durch einen zuvor aufgenommenen Maßstab 24 bereitgestellt, sondern mittels eines Lasersystems oder Projektors auf den Boden im Umgebungsbereich des Reifens 14 projiziert. Konkret umfasst die Skala hier eine Vielzahl von gleichbeabstandeten Lichtpunkten, die entlang einer imaginären Linie angeordnet sind, welche parallel zur Querachse bzw. rechtwinklig zur Längsachse des Fahrzeugs 10 ausgerichtet ist. Dieses Verfahren unterscheidet sich von dem zuvor beschriebenen Verfahren also darin, dass nicht erst ein Ausgangsbild 22 mit Maßstab 24 bei stillstehendem Fahrzeug aufgenommen und anschließend Zwischenbilder 28 mit dem Ausgangsbild 22 überlagert werden müssen, sondern dass die durch die Kamera 12 während der Fahrt aufgenommenen Bilder bereits die auf den Boden projizierte Lichtskala 25 enthalten und somit direkt Messbilder 30 bilden, in denen der tatsächliche und der berechnete Abstand zwischen Reifen 14 und Fahrbahnmarkierung 20 abgelesen und verglichen werden können.

Wenn die Fahrbahnmarkierung 20 keine durchgezogene Linie bildet, sondern beispielsweise eine unterbrochene Linie, wie z.B. eine Leitlinie, kann der Abstand prinzipiell auch durch eine Projektion der Fahrbahnmarkierung 20 parallel zu ihrem inneren Rand auf den Maßstab 24 bestimmt werden. In der Praxis ist das Verhältnis zwischen der Geschwindigkeit, mit der sich der tatsächliche Abstand zwischen Reifen 14 und Fahrbahnmarkierung 20 ändert, und der Geschwindigkeit, mit der eine Linienunterbrechung passiert wird, normalerweise aber derart günstig, dass auf den nächsten sichtbaren Linienabschnitt "gewartet" werden kann, bevor der tatsächliche Abstand abgelesen wird, ohne dass die Genauigkeit einer Validierung des berechneten Abstands zwischen Reifen 14 und Fahrbahnmarkierung 20 signifikant beeinträchtigt wird.

Die visuelle Ausgabeeinheit 26 kann neben dem berechneten Abstand zusätzliche Informationen wie z.B. die Uhrzeit oder Zeitmarkierungen eines Frame-Zählers anzeigen. Dadurch lässt sich das Messbild 30 einem Bild einer Frontkamera 16 des Spurhalteassistenten oder einem seiner Berechnungsschritte zeitlich zuordnen und es ist keine zusätzliche Synchronisation zwischen Messbild 30 und Bild der Frontkamera 16 notwendig. Wenn der berechnete Abstand von dem tatsächlichen Abstand abweicht, kann auf diese Weise der Zeitpunkt der Abweichung mit durch die Frontkamera 16 aufgenommenen Fahrbahnbedingungen verglichen werden. So lässt sich zum Beispiel der Zustand einer Fahrbahnmarkierung 20 mit dem berechneten Abstand in Verbindung setzen, um den Einfluss von Verschmutzungen oder Verschleiß der Fahrbahnmarkierung 20 auf die Berechnungsgenauigkeit und Zuverlässigkeit des Spurhalteassistenten zu untersuchen.

Allgemein kann der Reifen 14 ein anlenkbarer Reifen 14, insbesondere ein Vorderreifen, sein. Selbst wenn sich der Reifen 14 im Messbild 30 verdreht, bleibt der Maßstab 24 im Messbild 30 dort, wo er aufgenommen wurde, und das Verfahren liefert zuverlässige Lage- oder Abstandsinformationen. Ferner werden Spurhalteassistenten im Allgemeinen vornehmlich bei hohen Geschwindigkeiten aktiv, wie z.B. auf einer Autobahn. Gerade dort sind jedoch nur geringe Anlenkungswinkel des Reifens 14 zu erwarten, welche im Rahmen einer gewünschten Genauigkeit des erfindungsgemäßen Verfahrens vernachlässigt werden können.

Um alle Zeitschritte des Spurhalteassistenten zuverlässig überprüfen zu können, ist es vorteilhaft, wenn die Kamera 12 mindestens doppelt so viele Bilder pro Sekunde aufnimmt wie die Frontkamera 16, z.B. 60 Bilder pro Sekunde. Grundsätzlich können die Bildfrequenzen der Kamera 12 und der Frontkamera 16 jedoch auch gleich sein und z.B. jeweils 30 Bilder pro Sekunde betragen.

### Bezugszeichenliste

- 10: Fahrzeug
- 12: Kamera
- 14: Reifen
- 16: Frontkamera
- 18: Windschutzscheibe
- 20: Fahrbahnmarkierung
- 22: Ausgangsbild
- 24: Maßstab
- 25: Skala
- 26: visuelle Ausgabeeinheit
- 28: Zwischenbild
- 30: Messbild

## Patentansprüche

1. Verfahren zum Vergleichen von einer durch ein Fahrerassistenzsystem berechneten Lage eines Fahrzeugmerkmals (14) relativ zu einem in einem Umgebungsbereich des Fahrzeugmerkmals (14) befindlichen Umgebungsmerkmal (20) mit einer tatsächlichen Lage des Fahrzeugmerkmals (14) relativ zu dem Umgebungsmerkmal (20) mit den Schritten:
Ausgeben der durch das Fahrerassistenzsystem berechneten Lage;
Ermitteln der tatsächlichen Lage;
Vergleichen der berechneten Lage mit der tatsächlichen Lage;
wobei das Ermitteln der tatsächlichen Lage die Schritte umfasst:
Anordnen einer Kamera (12) an dem Fahrzeug (10) mit einer festen Orientierung relativ zu dem Fahrzeug (10) derart, dass das Fahrzeugmerkmal (14) und ein Umgebungsbereich des Fahrzeugmerkmals (14) im Sichtbereich der Kamera (12) liegen;
Erzeugen einer Skala (25) in dem Umgebungsbereich des Fahrzeugmerkmals (14) für die Ermittlung der Lage des Fahrzeugmerkmals (14) relativ zu einem in dem Umgebungsbereich befindlichen Umgebungsmerkmal (20);
Während einer Fahrt des Fahrzeugs Aufnehmen wenigstens eines Messbildes (30) mittels der Kamera (12) oder Erzeugen wenigstens eines Messbildes (30) aus einem durch die Kamera (12) aufgenommenen Bild, wobei das Messbild (30) das Fahrzeugmerkmal (14), die Skala (25) und ein in dem Umgebungsbereich des Fahrzeugmerkmals (14) befindliches Umgebungsmerkmal (20) enthält;
Ermitteln der Lage des Fahrzeugmerkmals (14) relativ zu dem Umgebungsmerkmal (20) anhand der Position des Umgebungsmerkmals (20) relativ zu der Skala (25) im Messbild (30).

2. Verfahren nach Anspruch 1, wobei das Erzeugen der Skala (25) und das Erzeugen des Messbildes (30) die Schritte umfassen:
Anlegen eines Maßstabs (24) an das Fahrzeugmerkmal bei stehendem Fahrzeug (10);
Aufnehmen eines das Fahrzeugmerkmal (14) und den Maßstab (24) enthaltenden Ausgangsbildes (22) durch die Kamera;
Entfernen des Maßstabs (24) von dem Fahrzeugmerkmal (14);
Aufnehmen wenigstens eines Zwischenbildes (28) durch die Kamera (12) während einer Fahrt des Fahrzeugs (10), wobei das Zwischenbild (28) das Fahrzeugmerkmal (14) und ein in dem Umgebungsbereich des Fahrzeugmerkmals (14) befindliches Umgebungsmerkmal (20) enthält;
zumindest teilweises Überlagern des Ausgangsbildes (22) und des Zwischenbildes (28) zu dem Messbild (30) derart, dass der Maßstab (24) im Messbild (30) an der Stelle sichtbar ist, an der er im Ausgangsbild (22) aufgenommen wurde, und das mit dem Zwischenbild (28) aufgenommene Umgebungsmerkmal (20) im Messbild (30) sichtbar ist.

3. Verfahren nach Anspruch 2,
**dadurch gekennzeichnet, dass**
das Anlegen des Maßstabs (24) ein Platzieren des Maßstabs (24) auf einem Boden umfasst, auf dem das Fahrzeug (10) steht, und/oder der Maßstab (24) im Wesentlichen quer, insbesondere senkrecht, zu einer Längsachse des Fahrzeugs (10) angelegt wird.

4. Verfahren nach Anspruch 1,
**dadurch gekennzeichnet, dass**
die Skala (25), insbesondere durch ein Lasersystem und/oder einen Projektor, auf einen Bodenabschnitt im Umgebungsbereich des Fahrzeugmerkmals (14) projiziert wird und das Messbild (30) ein von der Kamera (12) aufgenommenes Bild ist.

5. Verfahren nach einem der vorhergehenden Ansprüche,
**dadurch gekennzeichnet, dass**
als Lage ein, insbesondere quer und/oder senkrecht zu einer Längsachse des Fahrzeugs (10) gemessener, Abstand zwischen dem Fahrzeugmerkmal (14) und dem Umgebungsmerkmal (20) ermittelt wird.

6. Verfahren nach einem der vorhergehenden Ansprüche,
**dadurch gekennzeichnet, dass**
das Fahrzeugmerkmal (14) ein Reifen des Fahrzeugs (10) ist und/oder das Umgebungsmerkmal (20) eine Fahrbahnmarkierung oder -begrenzung ist.

7. Verfahren nach einem der vorhergehenden Ansprüche,
**dadurch gekennzeichnet, dass**
das Zwischenbild (28) und/oder das Messbild (30) Frames jeweiliger Zwischen- bzw. Mess-Videosequenzen bilden.

8. Verfahren nach einem der vorhergehenden Ansprüche,
**dadurch gekennzeichnet, dass**
die berechnete Lage im Messbild (30) dargestellt wird, insbesondere mittels einer am Fahrzeug (10) und in dem Sichtbereich der Kamera (12) angeordneten visuellen Ausgabeeinheit (26).

9. Verfahren nach einem der vorhergehenden Ansprüche,
**dadurch gekennzeichnet, dass**
zusätzliche Informationen des Fahrerassistenzsystems, insbesondere Zeitmarkierungen, im Messbild (30) dargestellt werden, insbesondere mittels einer am Fahrzeug (10) und in einem Sichtbereich der Kamera (12) angeordneten visuellen Ausgabeeinheit (26).

10. Verfahren nach einem der vorhergehenden Ansprüche,
**dadurch gekennzeichnet, dass**
die berechnete Lage und/oder zusätzliche Informationen des Fahrerassistenzsystems zumindest teilweise in Form einer computerlesbaren Codierung, insbesondere eines Strich- oder QR-Codes, angezeigt werden.

11. Verfahren nach einem der vorhergehenden Ansprüche,
**dadurch gekennzeichnet, dass**
das Messbild (30) durch eine Bildanzeige angezeigt wird.

12. Verfahren nach einem der vorhergehenden Ansprüche,
**dadurch gekennzeichnet, dass**
das Fahrerassistenzsystem einen Spurhalteassistenten und/oder einen Spurverlassenswarnassistenten umfasst und/oder das Fahrzerassistenzsystem die Lage des Fahrzeugmerkmals (14) relativ zu dem Umgebungsmerkmal (20) auf der Grundlage von durch eine zweite Kamera (16) aufgenommenen Bildern berechnet, wobei das Fahrzeugmerkmal (14) außerhalb des Sichtbereichs der zweiten Kamera (16) liegt.

## Claims

1. A method of comparing a position of a vehicle feature (14) calculated by a driver assistance system relative to an environmental feature (20) located in a surrounding region of the vehicle feature (14) with an actual position of the vehicle feature (14) relative to the environmental feature (20) comprising the steps:
outputting the position calculated by the driver assistance system;
determining the actual position;
comparing the calculated position with the actual position,
wherein the determination of the actual position comprises the steps:
arranging a camera (12) at the vehicle (10) with a fixed orientation relative to the vehicle (10) such that the vehicle feature (14) and a surrounding region of the vehicle feature (14) are disposed in the field of view of the camera (12);
generating a scale (25) in the surrounding region of the vehicle feature (14) for the determination of the position of the vehicle feature (14) relative to an environmental feature (20) located in the surrounding region;
recording at least one measurement image (30) by means of the camera (12) during a trip of the vehicle or generating at least one measurement image (30) from an image recorded by the camera (12), with the measurement image (30) including the vehicle feature (14), the scale (25) and an environmental feature (20) located in the surrounding region of the vehicle feature (14); and
determining the position of the vehicle feature (14) relative to the environmental feature (20) using the position of the environmental feature (20) relative to the scale (25) in the measurement image (30).

2. A method in accordance with claim 1, wherein the generation of the scale (25) and the generation of the measurement image (30) comprise the steps:
applying a measuring stick (24) to the vehicle feature when the vehicle (10) is stationary;
recording a starting image (22), including the vehicle feature (14) and the measuring stick (24), by the camera;
removing the measuring stick (24) from the vehicle feature (14);
recording at least one intermediate image (28) by the camera (12) during a trip of the vehicle (10), with the intermediate image (28) including the vehicle feature (14) and an environmental feature (20) located in the surrounding region of the vehicle feature (14); and
at least partly superposing the starting image (22) and the intermediate image (28) with respect to the measurement image (30) such that the measuring stick (24) is visible in the measurement image (30) at that point at which it was recorded in the starting image (22) and the environmental feature (20) recorded with the intermediate image (28) is visible in the measurement image (30).

3. A method in accordance with claim 2,
**characterized in that**
the application of the measuring stick (24) comprises placing the measuring stick (24) on the ground on which the vehicle (10) stands and/or applying the measuring stick (24) substantially transversely, in particular perpendicular, to a longitudinal axis of the vehicle (10).

4. A method in accordance with claim 1,
**characterized in that**
the scale (25) is projected, in particular by a laser system and/or by a projector, onto a ground section in the surrounding region of the vehicle feature (14) and the measurement image (30) is an image recorded by the camera (12).

5. A method in accordance with any one of the preceding claims,
**characterized in that**
a spacing between the vehicle feature (14) and the environmental feature (20), in particular measured transversely and/or perpendicular to a longitudinal axis of the vehicle (10), is determined as the position.

6. A method in accordance with any one of the preceding claims,
**characterized in that**
the vehicle feature (14) is a tire of the vehicle (10) and/or the environmental feature (20) is a road marking or a road boundary.

7. A method in accordance with any one of the preceding claims,
**characterized in that**
the intermediate image (28) and/or the measurement image (30) forms/form frames of respective intermediate video sequences or measurement video sequences.

8. A method in accordance with any one of the preceding claims,
**characterized in that**
the calculated position is represented in the measurement image (30), in particular by means of a visual output unit (26) arranged at the vehicle (10) and in the field of view of the camera (12).

9. A method in accordance with any one of the preceding claims,
**characterized in that**
additional pieces of information of the driver assistance system, in particular time markings, are represented in the measurement image (30), in particular by means of a visual output unit (26) arranged at the vehicle (10) and in a field of view of the camera (12).

10. A method in accordance with any one of the preceding claims,
**characterized in that**
the calculated location and/or additional pieces of information of the driver assistance system is/are at least partly displayed in the form of a computer-readable code, in particular of a bar code or QR code.

11. A method in accordance with any one of the preceding claims,
**characterized in that**
the measurement image (30) is displayed by an image display.

12. A method in accordance with any one of the preceding claims,
**characterized in that**
the driver assistance system comprises a lane keeping assist system and/or a lane departure warning system and/or the driver assistance system calculates the position of the vehicle feature (14) relative to the environmental feature (20) on the basis of images recorded by a second camera (16), with the vehicle feature (14) being disposed outside the field of view of the second camera (16).

## Revendications

1. Procédé pour comparer une position, calculée par un système d'assistance à la conduite, d'une caractéristique de véhicule (14) par rapport à une caractéristique d'environnement (20) située dans une zone environnante de la caractéristique de véhicule (14), avec une position réelle de la caractéristique de véhicule (14) par rapport à la caractéristique d'environnement (20), comprenant les étapes consistant à :
émettre la position calculée par le système d'assistance à la conduite,
déterminer la position réelle ;
comparer la position calculée avec la position réelle ;
la détermination de la position réelle comprenant les étapes consistant à :
agencer une caméra (12) sur le véhicule (10) avec une orientation fixe par rapport au véhicule (10) de telle sorte que la caractéristique de véhicule (14) et une zone environnante de la caractéristique de véhicule (14) se trouvent dans le champ de vision de la caméra (12) ;
générer une échelle (25) dans la zone environnante de la caractéristique de véhicule (14) pour déterminer la position de la caractéristique de véhicule (14) par rapport à une caractéristique d'environnement (20) située dans la zone environnante ;
pendant une conduite du véhicule, prendre au moins une image de mesure (30) au moyen de la caméra (12) ou générer au moins une image de mesure (30) à partir d'une image prise par la caméra (12), l'image de mesure (30) comprenant la caractéristique de véhicule (14), l'échelle (25) et une caractéristique d'environnement (20) située dans la zone environnante de la caractéristique de véhicule (14) ;
déterminer la position de la caractéristique de véhicule (14) par rapport à la caractéristique d'environnement (20) en se basant sur la position de la caractéristique d'environnement (20) par rapport à l'échelle (25) dans l'image de mesure (30).

2. Procédé selon la revendication 1,
dans lequel
la génération de l'échelle (25) et la génération de l'image de mesure (30) comprennent les étapes consistant à :
appliquer une règle graduée (24) à la caractéristique de véhicule, le véhicule (10) étant à l'arrêt ;
prendre une image de départ (22), contentant la caractéristique de véhicule (14) et la règle graduée (24), par la caméra ;
retirer la règle graduée (24) de la caractéristique de véhicule (14) ;
prendre au moins une image intermédiaire (28) par la caméra (12) pendant une conduite du véhicule (10), l'image intermédiaire (28) comprenant la caractéristique de véhicule (14) et une caractéristique d'environnement (20) située dans la zone environnante de la caractéristique de véhicule (14) ;
superposer au moins partiellement l'image de départ (22) et l'image intermédiaire (28) sur l'image de mesure (30) de telle sorte que la règle graduée (24) est visible dans l'image de mesure (30) à l'emplacement auquel elle a été prise dans l'image de départ (22) et que la caractéristique d'environnement (20) prise avec l'image intermédiaire (28) est visible dans l'image de mesure (30).

3. Procédé selon la revendication 2,
**caractérisé en ce que**
l'application de la règle graduée (24) comprend un positionnement de la règle graduée (24) sur un sol sur lequel se situe le véhicule (10), et/ou **en ce que** la règle graduée (24) est appliquée sensiblement transversalement, en particulier perpendiculairement à un axe longitudinal du véhicule (10).

4. Procédé selon la revendication 1,
**caractérisé en ce que**
l'échelle (25) est projetée sur une partie du sol dans la zone environnante de la caractéristique de véhicule (14), en particulier par un système laser et/ou par un projecteur, et l'image de mesure (30) est une image prise par la caméra (12).

5. Procédé selon l'une des revendications précédentes,
**caractérisé en ce que**
une distance est déterminée à titre de position, qui est mesurée entre la caractéristique de véhicule (14) et la caractéristique d'environnement (20) en particulier transversalement et/ou perpendiculairement à un axe longitudinal du véhicule (10).

6. Procédé selon l'une des revendications précédentes,
**caractérisé en ce que**
la caractéristique de véhicule (14) est un pneumatique du véhicule (10) et/ou la caractéristique d'environnement (20) est un marquage routier ou une délimitation de chaussée.

7. Procédé selon l'une des revendications précédentes,
**caractérisé en ce que**
l'image intermédiaire (28) et/ou l'image de mesure (30) constituent des trames de séquences vidéo intermédiaires ou de mesure respectives.

8. Procédé selon l'une des revendications précédentes,
**caractérisé en ce que**
la position calculée est illustrée dans l'image de mesure (30), en particulier au moyen d'une unité d'émission visuelle (26) agencée sur le véhicule (10) et dans le champ de vision de la caméra (12).

9. Procédé selon l'une des revendications précédentes,
**caractérisé en ce que**
des informations supplémentaires du système d'assistance à la conduite, en particulier des marquages temporels, sont illustrées dans l'image de mesure (30), en particulier au moyen d'une unité d'émission visuelle (26) agencée sur le véhicule (10) et dans un champ de vision de la caméra (12).

10. Procédé selon l'une des revendications précédentes,
**caractérisé en ce que**
la position calculée et/ou des informations supplémentaires du système d'assistance à la conduite sont affichées au moins partiellement sous la forme d'un codage lisible par ordinateur, en particulier sous la forme d'un code à barres ou d'un code QR.

11. Procédé selon l'une des revendications précédentes,
**caractérisé en ce que**
l'image de mesure (30) est affichée par un affichage d'image.

12. Procédé selon l'une des revendications précédentes,
**caractérisé en ce que**
le système d'assistance à la conduite comprend un système d'alerte de franchissement involontaire de ligne et/ou un système d'alerte de sortie de voie, et/ou le système d'assistance à la conduite calcule la position de la caractéristique de véhicule (14) par rapport à la caractéristique d'environnement (20) en se basant sur des images prises par une seconde caméra (16), la caractéristique de véhicule (14) se situant à l'extérieur du champ de vison de la seconde caméra (16).
